# EUROPEAN PATENT SPECIFICATION

(11) **EP 4 386 336 B1**
(45) Date of publication and mention of the grant of the patent: **28.01.2026**
(21) Application number: 22214156.6
(22) Date of filing: 16.12.2022
(51) Int. Cl.: G01G 19/56, A47J 31/40

(54) **SCALE SYSTEM**
GEWICHTSMESSSYSTEM
SYSTÈME DE MESURE DE POIDS

(43) Date of publication of application: 19.06.2024
(73) Proprietor: APTARGROUP HOLDING SAS, 78430 Louveciennes (FR)
(72) Inventor: Barrios, Piers, 61000 Alencon (FR); McGeough, Peter, Kells County Meath, A82N5H6 (IE)
(74) Representative: Witte, Weller und Partner Patentanwälte mbB Stuttgart

(56) References cited:
- WO-A1-2006/054035

## Description

### FIELD OF APPLICATION AND PRIOR ART

The invention relates to a scale system for measuring a quantity of powder, in particular for measuring a quantity of powder for mixing baby food.

The preparation of infant formular and baby food, in particular baby milk, from powder requires a dosage of this powder. Usually, this dosing is done by measuring a dosing volume by means of a measuring scoop with a defined measuring scoop volume. For example, it is usual to mix 100 ml of heated water and four volumes of the measuring scoop of milk powder to produce 120 ml of baby milk.

However, this type of dosing is prone to errors. If the measuring scoop is overfilled, too much powder may be mixed with too little water. If the measuring spoon is not completely filled, for example because there is an empty area below a closed powder surface, then too little powder may be mixed with too much water. Furthermore, there is a risk that an error occurs regarding the numbering of filled scoops and too many or too little spoonfuls of powder are added to the water.

It is well known that scoop scales are used to control the amount of powder measured by the measuring scoop. However, scoop scales are difficult to handle and must be correctly aligned manually for correct measurement. In addition, a scoop scale cannot reliably prevent one full scoop too little or one full spoon too much of powder being mixed with the water due to miscount.

Measuring a powder quantity is not only used for baby food. There is also a similar need in other fields as in the area of adult nutrition, especially in the area of sports nutrition.

Document WO 2006/054035 A1 describes a food preparation device designed to simplify the process of preparing baby formula. It includes a receptacle with multiple compartments for storing precise amounts of powdered formula, which can be selectively discharged. The device heats and dispenses water at the correct temperature to mix with the formula.

### OBJECT OF THE INVENTION

The object of the invention is to provide an advantageous possibility to be able to measure a product quantity in a simple and exact way, in particular a powder quantity of baby milk powder.

According to the invention, a scale system is primarily proposed for this purpose, which is designed in a special way to comprise or accommodate a powder container filled with powder and/or to facilitate the removal of powder from this container.

A scale system according to the invention has a base housing for stationary placement. In particular, this base housing can be formed with feet made of rubber or plastic, so that it can be placed on a table or a kitchen surface without damaging the surface.

The scale system further comprises a weighing surface which is movable in a vertical direction relative to the base housing so as to be depressed by the weight force of a weighing product resting on the weighing surface.

To detect the mass of the weighing surface and the powder being placed thereon, the scale system has a weighing sensor that in particular measures the mass of a powder container filled with powder that can be placed on the weighing product surface. The weighing sensor can, for example, be a force sensor or a pressure sensor.

The scale system also has an evaluation device, which is designed to evaluate sensor data from the weighing sensor and to generate output data, which is then being output on a display device.

In the state of use, the powder is resting on the weighing surface, preferably in a disposable powder container, which in particular preferably simultaneously represents the delivery packaging of the powder. For example, it can be a metallic can or a disposable plastic container. Further details on possible containers are explained in further detail below. In addition to the scale system for receiving such a container, the invention also relates to a set which, in addition to the scale system, comprises at least one such powder container.

The powder container remains on the weighing surface for a longer period of time during the use of the scale system and during the removal of powder, so that with increasing removal of powder from the container, the reduction in the weight of the container and the remaining powder is detected by the weighing sensor. Based on the detected weight, the scale system generates output data that is output to the display device.

The scale system according to the invention is intended in particular for measuring a quantity of powder, whereby granules are also understood within the meaning of powder according to this invention. In principle, use for other non-powdery products is also possible, for example for liquid or highly viscous cream-like products. Additional to the main aspect of the invention concerning the use with powder, the invention also comprises, according to a secondary aspect, a scale system for measuring said other products and in particular liquids. Insofar powder is referred to in the context of the description, this equally includes the other products mentioned above and in particular liquid products in case the scale system is intended or designed for said other products.

A particular aspect of the invention relates to the type of output data generated and displayed on the display device. It is provided that the evaluation device is configured to determine during a stepwise removal of a partial mass from the weighing surface the partial mass already removed in course of the specific removal operation by comparing the mass currently measured by the weighing sensor with a previously recorded reference mass prior to the beginning of the removal operation. On basis of said partial mass already removed the evaluation device generates output data displays said output data on the display device. Said output data reflects the partial mass removed since the recordation of the reference mass and comprises an increasing output value representing the removed partial mass. With the progressive removal of further powder from the powder container, this output value increases stepwise.

The scale system according to the invention is thereby able to inform the user which powder quantity he has already removed, for example for the production of one current bottle of baby milk. As the removal progresses, the value increases. As soon as the user has removed the intended amount of powder, he ends the removal. Advantageously the user gets a specific signal once a sufficient mass of powder has been removed.

The risk of using too little or too much powder is thereby reduced. The danger of the user miscounting the number of scoops already removed is also reduced. The user can check the current status of the removal on the display device. Even if the measuring scoop is not filled correctly, or if the powder is not taken with a measuring scoop of defined volume, but for example by means of an ordinary tablespoon, the user can record on the display device the amount of powder already removed and check whether further powder is required.

Said value, which is generated by the evaluation device, and which is output as part of the output data from the display device, can in the simplest case be the powder mass removed since the reference mass was recorded in grams. For example, if a mass of 3,6 grams of powder is taken as a single volume of measuring scoop and if three spoonfuls of powder are being removed, the output value increases from 0 to 3,6, then from 3,6 to 7,2, and finally from 7,2 to 10,8.

However, it is preferable that the value corresponds to a number of mass units stored in the evaluation device or calculable by the evaluation device, or that such a value on basis of said mass unit is output in addition to the simple mass value described above. A mass unit can correspond in particular to that mass which of the scoop filling quantity of a defined level scoop, such a measuring scoop preferably being part of the scale system. The size of the unit mass preferably is between 2 grams and 10 grams. Referring to a milk powder with 500 grams / liter, for example, a mass unit of 3,6 grams corresponds to a spoon filling quantity of 7,2 cm³.

The size of a mass unit can be permanently stored in the evaluation device. It is also possible that several different mass units are stored there, corresponding to different measuring scoops. Alternatively, the size of the mass unit can also be calculated by the evaluation device, for example, by calculating the mass per spoonful volume on the basis of a known spoonful volume stored in the evaluation device and additionally using a density value specific to the current powder. Usually, infant formular powder has a density between 0,4 g/cm³ and 0,5 g/cm³.

Using a mass unit, which corresponds to the level scoop filling volume of a measuring scoop, the output value generated by the evaluation device and displayed on the display device increases from 0 to 1, then from 1 to 2, and finally from 2 to 3, when three spoonfuls of powder are removed.

Although this number of full spoonsful is usually an integer number when removing intended scoop fill quantities, the value can also be displayed in the form of a decimal fraction, depending on the configuration of the evaluation device. For example, a value of 0.8 can be displayed if the powder quantity of an incompletely filled measuring scoop is removed from the container.

The measuring scoop associated with the scale system preferably has a scoop volume of between 1 cm³ and 30 cm³, in particular between 4 cm³ and 9 cm³. It can be advantageous to use a relatively heavy spoon, for example a metallic spoon with a mass of 20 grams or more, in order to detect its separation from a scoop holder described below.

The scale system preferably has a leveling rim, which is preferably not provided on the disposable container itself, but on the scale system separate from the container. By means of this leveling rim, excess powder can be wiped from the measuring scoop, so that the measuring scoop has a level powder surface as intended.

For the measuring scoop associated with the scale system, a scoop holder is preferably provided on the scale system, by which or in which the measuring scoop is stored when not in use. The scoop holder can be provided on the base housing or stationary relative to the weighing surface, whereby this also includes a holder on a lid which is stationary relative to the weighing surface when the lid is closed. In particular, the scoop holder can be provided on an inner side of the lid. Suitable holders for the scoop can be provided for magnetic adhesion of the measuring scoop or also for clamping reception of the measuring scoop. In the case of a clamping holder, the holder is preferably at least partially made of an elastomer material which is elastically deformed to accommodate the measuring scoop.

Preferably, the evaluation device is not only configured to generate the output value for display on the display device, but also to determine the partial mass of a single removal in the course of the stepwise increase of the removed partial mass, and to compare the partial mass of the single removal with an expected mass of a scoop volume full of powder. The evaluation device is therefore able to compare the powder mass taken in the course of a single removal with a mass value, which corresponds to a correctly filled measuring scoop and which can be stored in the evaluation device or be calculated by the evaluation device, taking into account the powder density. A deviation of the powder mass of the single removal from the expected powder mass represents an indication of incorrect use of the measuring scoop.

The detection of a deviation can be signaled to the user by the evaluation device, for example by an acoustic signal generator. In particular, the signaling may be provided by the display device. For example, the display device can indicate to the user whether the measuring scoop is overfilled or un-derfilled or if more scoops are taken than intended. The display device can show this in text form or by means of a symbol graphic. Furthermore, it can be provided that the display device contains a further action instruction for the user, for example an instruction to pour the contents of the incorrectly filled scoop back into the powder container and to try again.

As described above, the determination of the powder mass removed is carried out by a comparison of the mass detected by means of the weighing sensor and the reference mass stored before the start of the removal operation. The reference mass can be determined immediately at the start of the use of the scale system by reading out the weighing sensor. Preferably, however, the reference mass is already determined at the end of the previous usage and stored in a memory of the evaluation device.

The evaluation device is designed to detect the start of use of the scale system, for example, in order to determine the reference mass in response thereto and/or in order to activate a removal mode in response thereto, wherein in said removal mode the described evaluation of the removed mass and the display on the display device takes place. In particular, the weighing sensor can be activated in response to the beginning of the usage.

The evaluation device can detect the beginning of the usage of the scale system, for example, on the basis of the opening of a lid of the scale system. This can be done by a sensor provided on the lid or a locking device, or it can be done by the weighing sensor of the scale system. An additional acceleration sensor can also be used for detecting the opening of the lid. Furthermore, a movement of the scale system as a whole, for example due to its positioning on a table surface, can also be detected by the weighing sensor or an additional sensor and used to detect the beginning of usage. Furthermore, the separation of the measuring scoop from the lid can also be detected in order to recognize the beginning usage. The separation of the measuring scoop from the lid can be detected, for example, by a correspondingly reduced mass detected by the weighing sensor. Furthermore, a first partial removal of powder can also be detected and interpreted as the start of usage.

Apart from a recognition of the beginning of the usage by the described sensors, also a manually start function can be provided, by which the user changes the evaluation device to a removal mode and/or makes the evaluation device measure the reference mass. The start function can be initiated, for example, by a hardware button on the scale system or by a software button on a touchscreen or in an app on a connected smartphone.

For the described functionality of the evaluation device, it is sufficient to store data on the partial removals during a removal operation, for example during the removal of three scoops to be filled into a baby bottle. Preferably, however, the evaluation device stores the data for a plurality of removal operations over a longer period of time, in particular the data for all removal operations from a powder container starting from its initial opening until it is empty and replaced.

This data on the past removal operations can be output via the display device. Also, evaluations concerning missed removal operations and/or statistics to powder quantities deviating from the intended powder quantity can be provided. If a smartphone is being used to facilitate the removal operation, it is also possible to store data on who conducted the removal operation and thus prepared the baby food.

Preferably, the scale system provides a receiving space for receiving an exchangeable powder container, wherein a bottom surface of the receiving space is formed by the weighing surface.

In such a design, the scale system does not have a weighing surface which is freely accessible from all sides, but it is fully or essentially closed forming said receiving space, such that the powder container can be fully inserted into the receiving space. The weighing surface forms the bottom surface of the receiving space. The powder container is preferably inserted from above. Once inserted, the powder container is protected by the receiving space when not in use. In order to access the powder, the receiving space can be opened, preferably using a lid.

Preferably, the receiving space is surrounded circumferentially by a receiving space wall. This wall can be provided stationary on the base housing. Preferably, however, it is fixed to the weighing surface and thus movable relative to the base housing together with the weighing surface. In this case, the mass of the peripheral receiving space wall also bears on the weighing sensor. In particular, preferably at least part of the receiving space wall is integrally connected to the weighing product surface. The weighing surface and a part of the receiving space wall are then formed by an upwardly open and preferably cup-like receptacle, into which the powder container can be inserted from above. The receiving space preferably has a cylindrical shape. Its base can be round, but it can also have a different shape and be for example rectangular.

On the upper side opposite the weighing surface, a removable or displaceable lid is preferably provided, by means of which the receiving space can be opened in order to remove powder from the powder container and closed when not in use. This allows the powder to be protected when not in use. Preferably an own cover of the powder container is not placed back on the container after insertion of the powder container in the receiving space, but instead the lid delimiting to the top side of the receiving space protects the powder in the powder container.

The lid can be movably provided at an upper end of the receiving space wall. In particular, it can be movable pivotably having a hinged lid with the hinge being provided at the upper end of the receiving space. In this case, it is preferably provided that a snap-locking device is provided opposite the lid hinge for securing the lid in the closed state, said snap-locking device preferably provided in the form of a pivotable snap-locking tab on the receiving space wall or on the lid. A snap-locking device allows the lid to be closed particularly tightly. Preferably, a sealing component is provided on the lid or opposite it on a contact edge to provide a secure sealing in the closed state.

In one particular design of the receiving space wall, the receiving space wall is modular so that the receiving space can be variably configured with respect to its size. This can be achieved by joining two receiving space wall elements, one of which being available in different sizes as part of the scale system. A preferred design is one in which at least three receiving space wall elements are provided, wherein the size of the receiving space can be varied by using or not using at least one of the three receiving space wall elements. In particular, in a design having three receiving space wall elements, it may be provided that a first receiving space wall element is connectable to a second receiving space wall element and the second receiving space wall element is connectable to a third receiving space wall element by respective identical coupling means, for example by threaded means. Therefore, the second receiving space wall element can be fully removable to reduce the size of the receiving space and the first receiving space wall element can then be directly connected to the third receiving space wall element.

Preferably, it is provided that the receiving space wall is formed by at least two separable wall parts, which can be separated from each other for the purpose of removing a powder container and for the purpose of inserting a powder container. The wall parts can be identical with the above-described receiving space wall elements. However, a wall part can also be formed jointly by several and in particular of two receiving space wall elements.

In such a design with at least two separable wall parts, it is preferably provided that an upper one of the two wall parts has an inner diameter which is smaller than that of the powder container. When the two wall sections are connected after insertion of the container, the container is thus secured in the receiving space and cannot be removed out of the receiving space through upper wall part.

In the case of such two wall parts, which are separated for the purpose of inserting the container, it is advantageous if the wall parts can be connected to each other by a threaded connection. Preferably, the wall components are formed at least in sections as circular-cylindrically shaped wall parts for this purpose.

Alternatively, the wall parts can also be connected by a snap connection. In particular, a snap connection is preferred in the case of a non-circular cylindrical receiving space, for example in the case of a receiving space with a square or rectangular cross-section, in which a threaded connection is difficult to implement.

Preferably, the receiving space wall is provided with a wall window. Through the wall window, imprints on the inserted powder container can be read.

In use, the scale system is equipped with a container in which the powder, in particular infant formula, is contained and which preferably is the delivery packaging of the powder. This container is arranged on the weighing surface during operation.

Various types of containers can be used in a scale system according to the invention. Potential containers may have walls which are at least partially made of metal. In particular, a container body is preferably made of metal and in particular as a metal can, while a removable lid can also made of metal or of plastic. In another design the powder container is made partially or as a whole of plastic. In particular, it may be a multilayer plastic body forming the container body.

A particularly preferred form of a powder container used with the scale system according to the invention is made partly or entirely of cardboard and/or other paper or another cellulose-based material. Such a powder container represents a particularly environmentally friendly design and is easy to recycle. The powder container is protected against external influences by the receiving space of the scale system, so that thin and flexible paper walls can be sufficient in regular use.

Basically, two types of containers are possible, namely on the one hand powder containers with flexible walls in the manner of a powder bag, and on the other hand powder containers with rigid walls, which form a container body with essentially fixed dimensions. A powder bag needs a smaller amount of material and is therefore usually a more environmentally friendly solution, in particular in case of a bag of paper.

The powder container preferably has a closure element, which closes the container in the delivery state of the powder container and which is removed prior to the insertion into the receiving space. The closing element is no longer required after insertion of the container into the receiving space, since the powder contained in the container is protected from outside influences by the receiving space walls and the lid from the time of insertion into the receiving space.

A scale system according to the invention can be formed by a single structural unit thus forming the main unit, the basic housing of which preferably comprising the evaluation device and the display device. A preferred design is one in which the scale system comprises two subunits, namely a main unit comprising at least the base housing and the weighing surface and the weighing sensor, and an additional unit comprising at least the display device. Preferably, the additional unit is a computer, a tablet computer, a smart watch or, in particular, a smartphone equipped with an app connected to the main unit via a wireless network interface. The display device of the additional unit may be provided instead of a display device on the base housing. However, designs are possible in which a display device is also provided on the base housing. Preferably, at least one output device in the form of an LED or a loudspeaker is provided on the base housing.

The scale system, in particular its additional unit which preferably is a smart phone, can be connected to the Internet, in order to exchange data with a server on the internet. The scale system is preferably designed to initiate ordering processes concerning new powder containers. Preferably, the ordering process or a signaling to the user preceding the ordering process takes place as a function of a mass of the remaining powder detected by the weighing sensor. In case of an existing Internet connection, the scale system can also be designed to download data on different types of powder containers from the Internet, for example, in order to receive the powder density and/or dosage specifications for them and, if necessary, to use this information in the course of the evaluation by the evaluation device. The Internet connection also allows product authentication to be carried out in order to check originality criteria of an existing powder container.

The evaluation device, which evaluates the sensor data from the weighing sensor and generates the output data on the basis of this, can, in one possible design, be arranged completely in the main unit, in particular in the base housing. Accordingly, the main unit is fully functional on its own.

Alternatively, the evaluation device can also be subdivided into two evaluation subunits, one evaluation subunit in the main unit and one evaluation subunit in the additional unit. In such a design, it is thus provided that the generation of the output data for the display device takes place with the participation of both the main unit and the additional unit, and thus in particular of a smartphone. The evaluation subunits preferably each have a processor and memory. They preferably communicate via a wireless network such as WIFI or Bluetooth. They evaluation subunits can also be separately connected to the Internet and communicate with each other via the Internet.

In one possible embodiment, the acquisition of sensor data from the weighing sensor and possibly other sensors of the main unit is performed by the main unit and its evaluation subunit. The sensor data or a mass value determined on the basis thereof is then transmitted to the additional unit and its evaluation subunit, where further evaluation takes place, in particular the conversion into a value representing the removed mass or the removed scoop volumes and/or the check whether the mass of a partial removal corresponds to the mass to be expected on the basis of the measuring scoop. Alternatively, however, it can also be provided that the generation of the output value already takes place on the evaluation subunit of the main unit and is transmitted to the additional unit for the purpose of the displaying only.

The scale system can be designed in such a way that, at least on the main unit, it has no further sensor besides the weighing sensor. In addition to the actual detection of the mass of the remaining powder containers, the weighing sensor can also take over other functions, such as the detection that a removal operation has been started. With suitable evaluation, the weighing sensor can also be used, for example, to detect the opening of the lid or the changing of the container. A main unit with only one weighing sensor allows a relatively low production price.

However, the scale system, in particular its main unit, can also be equipped with at least one further sensor. This may, for example, be a sensor designed to detect a marking applied to the container, in particular an RFID reader or an optical sensor. This can be used to record data about the powder in question or to check the originality of the powder. However, instead of a sensor on the main unit, existing sensors of the smartphone used as an additional unit can also be used for this purpose.

Furthermore, a further sensor can also be provided on the main unit for mechanical detection of the opening of the lid, for example a switch or an acceleration sensor. An acceleration sensor can also detect the handling of the main unit regardless of a lid movement.

Preferably, the evaluation device, or the evaluation subunit on the main unit, can be operated in a power saving mode in which at least the weighing sensor is deactivated or not monitored, but parts of the evaluation subunit are in operation, the evaluation subunit being adapted to terminate the power saving mode in response to the detection of a manual activation or in response to specific sensor data from other sensors and thus to activate the weighing sensor. In particular, this can be done in response to the detection of a movement, determined by an accelerometer sensor.

The scale system, or in particular an app that is part of the scale system and which is executed on a smartphone, can also have supplementary functions in connection with the removal of powder, in addition to the main scale function. In particular, the scale system can have a signaling mechanism that indicates by signaling an upcoming planned removal of powder. This signaling can take place optically, acoustically and/or haptically via a vibrator. The scale system has furthermore preferably a logging mechanism, which logs the removal of powder and/or the expected, but missing removal of powder due to a time schedule deposited in a memory, in order to output this data or data derived therefrom on the display device. This can also include recommendations regarding the handling of the scale system.

For the purpose of easy cleaning, it is advantageous if the scale system or its main unit can be disassembled without tools. In particular, preferably the base housing and/or the weighing surface is separable from each other and/or from the weighing sensor. Preferably, the main unit has an electronic module enclosed by a housing, said module comprising all or at least the majority of the electronic components of the main unit and being separable as a whole from the base housing.

The scale system, in particular its main unit, can have a battery in order not to have to be permanently connected to an external power source. For powering the scale system and/or for charging said battery, a power connector is preferably provided on the main unit, in particular in the form of a USB power connector.

### BRIEF DESCRIPTION OF THE DRAWINGS

Further advantages and aspects of the invention are described and shown in the claims and in the following description of preferred embodiments of the invention, which are explained below with reference to the figures.
Fig. 1 shows a first embodiment of a scale system according to the invention with its partial components.
Fig. 2 shows a sectional view of the main unit of the scale system.
Fig. 3 shows the structure of the main unit with an exploded view of its components.
Fig. 4A to 4C illustrate the insertion of a powder container into the main unit.
Fig. 5 and 5A to 5F illustrate an exemplary removal operation, in the course of which three spoonfuls of powder are removed from a powder container while this process is monitored.
Fig. 6 shows an alternative design of a main unit.
Fig. 7A and 7B show the alternative main unit of Fig. 6 during the insertion of a powder container.

### DETAILED DESCRIPTION OF THE EMBODIMENTS

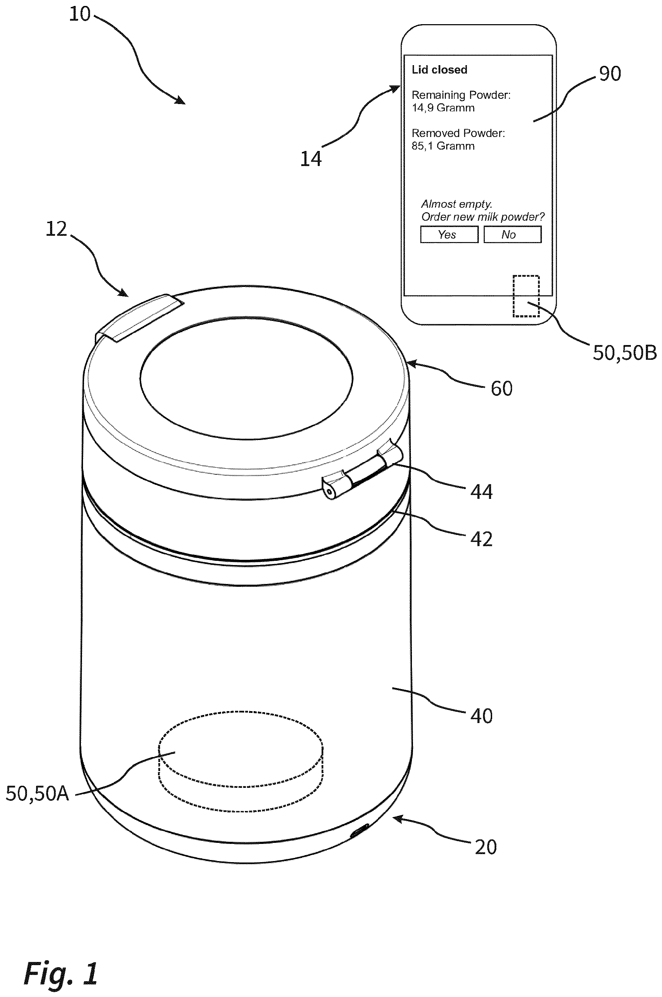

Fig. 1 shows a scale system 10 according to the invention comprising a main unit 12 and an additional unit 14 in the form of a smartphone.

The scale system 10 is intended for handling infant formular in powder form and for allowing easy powder dosing, in particular in course of the preparation of baby milk.

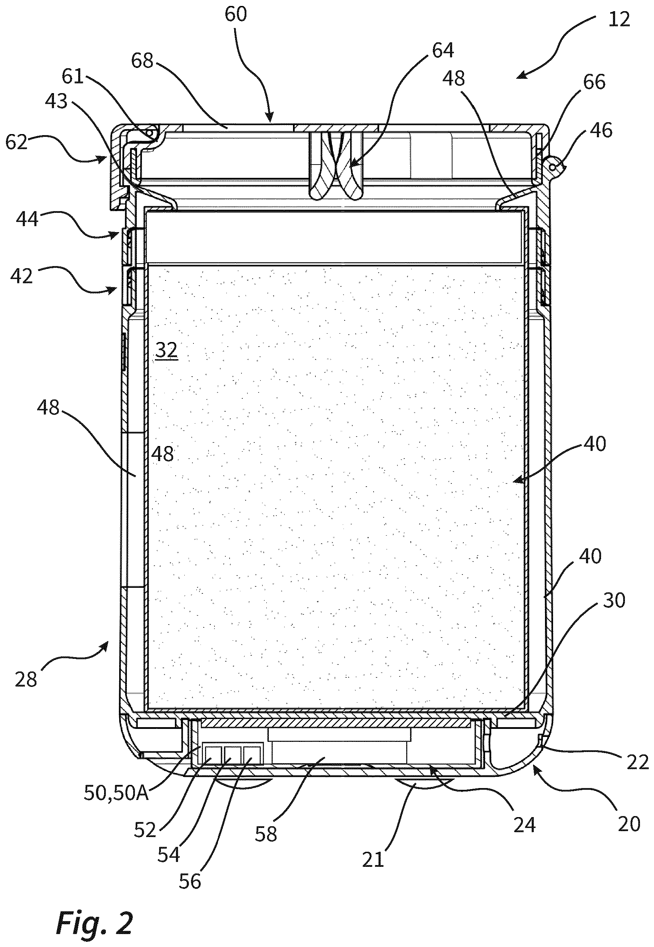

For this purpose, the main unit 12 is designed to receive a powder container 80. The main unit, which is shown in a sectional view in Fig. 2, has a flat base housing 20 with rubber feet 21. An electronics module 24 is located in a central recess of the base housing, which can be connected to a power source through an opening 22 in the base housing.

The electronics module 24 carries on its upper surface a cup-shaped receptacle 28, which is formed primarily by a weighing surface 30 and integrally therewith by a substantially cylindrical receiving space wall part 40. This receiving space wall part 40 is adjoined by a second receiving space wall part 42 and a final receiving space wall part 44. A hinged cover 60 is attached to the receiving space wall part 44, which can be pivoted by means of a hinge 46 and which has an outer part 61 and a sealing component 66 inserted therein. Opposite the hinge 46, the lid 60 is provided with a snap-lock device 62 getting in locking engagement with the receiving space wall part 44 when the lid 60 is closed.

On the inside of the lid 60, a scoop holder 64 is provided for receiving a measuring scoop. Furthermore, the lid 60 is provided with recesses forming lid windows 68. Additionally, the receiving space wall part 40 is provided with a viewing window 48.

Together, the weighing surface 30, the receiving space wall parts 40, 42, 44 and the lid 60 surround a receiving space 32. When the lid 60 is closed, the receiving space is essentially closed and thus protected against the ingress of moisture.

A powder container 80 is inserted into the receiving space 32. This powder container 80 is preferably a powder container 80 to be used only once and to be replaced once empty. The powder container 80 is formed by the packaging the powder has been sold / delivered in. As soon as the powder container 80 is empty, it is disposed and replaced by a new powder container 80. It is also possible to directly use the cup-like receptacle 28 as a powder container and to empty the powder into this reusable cup-like receptacle 28 in order to use it as powder container.

The lid 60 is opened when the removal of powder from the powder container 80 is intended. It can be swung open after opening the snap-lock device 62. Powder can then be removed from the powder container 80 with the measuring scoop, whereby it can be ensured by means of a leveling rim 45 that the measuring scoop 18 is levelled full at each removal.

In order to hold the powder container 80 securely in the receiving space 32, the upwardly terminating receiving space wall part 44 has an inwardly pointing retaining web 43. The inside diameter of the retaining web 43 is smaller than the powder container 80, so that the powder container 80 is secured in the receiving space 32.

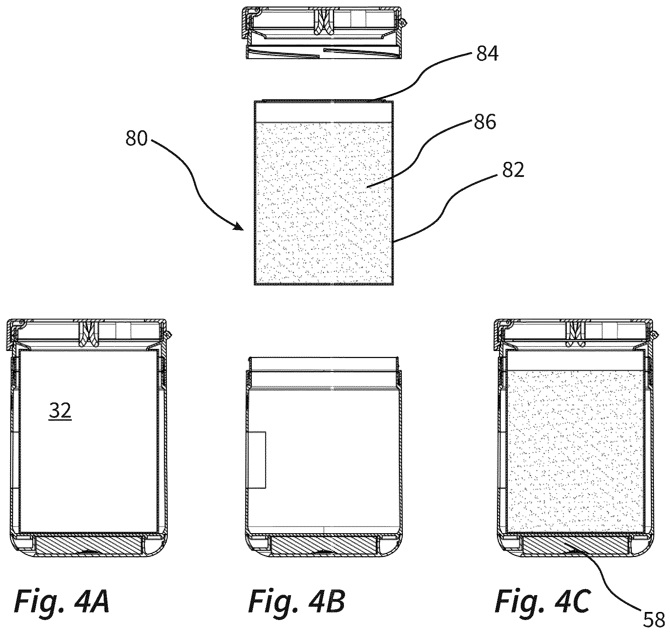

In order to remove the powder container 80 and to insert a new powder container 80, the multi-part design of the receiving space wall parts 40, 42, 44 is used. Figs. 4A to 4C illustrate this. The receiving space wall parts 42, 44, which are connected by a thread, are separated from each other, so that the receiving space 32 is accessible. Then, in the manner shown in Fig. 4B, the new powder container 80 containing powder 86 is inserted. However, a closing element 84 is first separated from a container body 82 of the powder container 80. Subsequently, the receiving space wall part 44 together with the lid 60 is screwed on, whereby a centering of the powder container 80 takes place due to the conical shaping of the retaining web 43. Fig. 4C shows the situation after insertion of the new powder container 80.

If a powder container with a smaller height is inserted, it is possible to remove the receiving space wall part 42 and to directly connect the receiving space wall parts 40 and 44 to each other.

Referring to the condition of Fig. 4C, the weighing sensor 58, which is part of the electronics module 24, detects the mass of the weighing surface 30 resting on it, together with the powder container 80 resting on it, as well as the receiving space wall parts 40, 42, 44 and the lid 60 together with the removal scoop 18 fastened in it.

Sensor data from the weighing sensor 58 is processed by a processor 52, which is supplied with electrical power by a battery 54 and which is in communication with the additional unit 14 shown in Fig. 1 by means of a wireless network interface 56. The processor 52 is adapted to further process the data acquired by the weighing sensor 58 and to transmit it to the additional unit 14. The further processing by the processor 52 of the main unit 12 can be of different types depending on the intended distribution of tasks between the evaluation subunits 50A, 50B.

The evaluation device 50 as a whole is designed to display the weight force detected by means of the weighing sensor 58 in a manner helpful for the removal operation on a display device 90. In particular, the display device 90 is the display of the smartphone 14, for which purpose an app as part of the weighing system 10 is preferably executed on the smartphone.

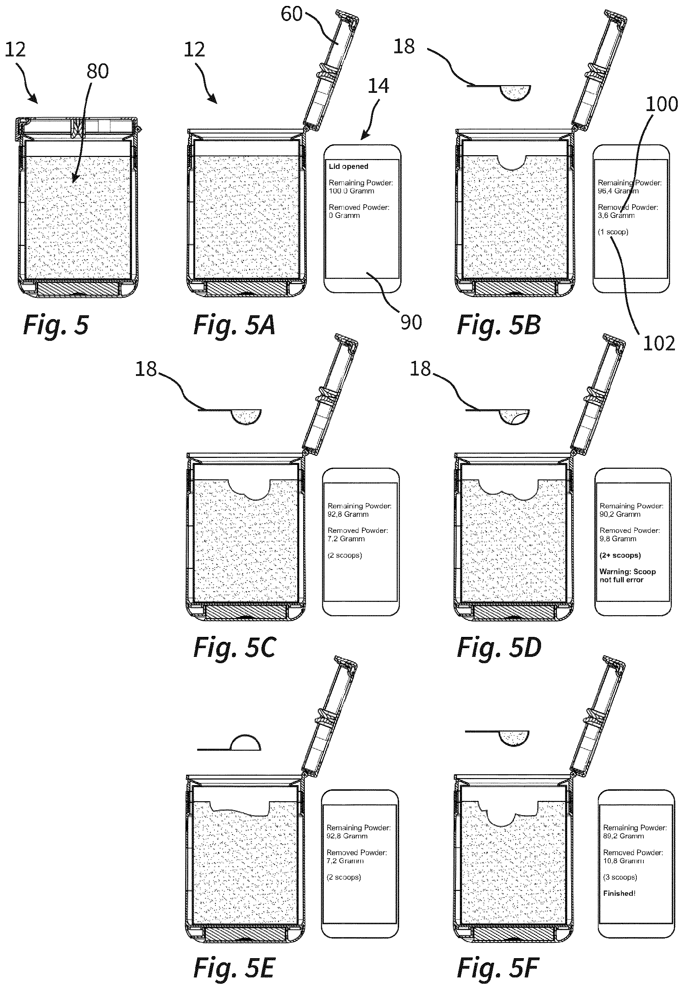

This is explained in detail with reference to Figs. 5 to 5F.

Fig. 5 shows the initial state after insertion of the new powder container 80. In this state, the weighing sensor 58 measures a mass of 265 grams as an example. This is the sum of the mass of the weighing surface 30, the receiving space wall parts 40, 42, 44 and the lid 60 of a total of 100 grams, the mass of the measuring scoop of 15 grams, the mass of the powder container of 50 grams and the mass of the powder itself of a total of 100 grams. In a memory of the evaluation device 50, a current mass value is stored as reference mass, preferably the powder mass value of 100 grams calculated on the basis of 265 grams.

As shown in Fig. 5A the lid 60 is opened to start the removal operation, namely to take three full scoop volumes form the powder container resulting in 10.8 grams of milk powder to prepare 90 ml of baby milk.

The main unit 12 is opened by pressing the snap-lock device 62. This results in a characteristic change in the force detected by the weight sensor 58. The processor 52 processes this change. In response thereto, or in response to a subsequent separation of the measuring scoop 18 and a measurement thereof by the weighing sensor 58, the evaluation device 50 assumes that a removal operation has started. Accordingly, information regarding the current removal operation appears on the display device 90.

The information shown on the display device 90 includes an indication of the amount of powder of 100 grams that is currently still available. This value initially corresponds to the stored reference mass value. Initially, 0 grams is still displayed on the display device 90 as the powder quantity removed.

As shown in Fig. 5B, the measuring scoop is now filled for the first time and freed of excess powder by means of the levelling rim 45. As soon as a constant measured value is again obtained at the weighing sensor 58, the evaluation device 50 recognizes that the remaining mass has been reduced by 3.6 grams, whereby this corresponds to the removed mass of the measuring scoop volume with the measuring scoop correctly filled. The remaining mass of 96.4 grams is displayed on the display device, as well as the information that 3.6 grams have been removed and that this corresponds to one scoop.

Fig. 5C shows the situation after the remaining mass has also been reduced by further 3.6 grams during the second removal. This corresponds to the mass to be expected with two correctly measured scoop volumes. Accordingly, the display device also shows the indication that this corresponds to two scoops in addition to the summed removal of 7.2 grams.

Fig. 5D shows a third removal, which is, however, incorrect. As can be seen in the figure, the measuring scoop 18 is not completely filled, as it has a powder-free area below the surface that is difficult for the user to see.

The evaluation device 50 recognizes that not the expected further 3.6 grams have been removed, but instead only 2.6 grams. This information is shown on the display device. A visually highlighted message is displayed that the powder mass of the last removal does not correspond to that expected. Alternatively or additionally, this can be signaled acoustically and/or by means of a signal LED. In particular, preferably, a loudspeaker is provided as part of the electronic module 24, which indicates the non-expected removal by a warning tone.

The user hereby recognizes the error and pours the scoop contents back into the container 80, as is illustrated in Fig. 5D. The data as after the second removal of Fig. 5C appears again on the display device 90.

The user then removes another spoonful of powder from the powder container 80 and makes sure that the scoop is completely filled this time. The evaluation device 50 recognizes from the mass detected by the weighing sensor 58 that the expected mass of 3.6 grams has now been removed, and displays the resulting value on the display device 90. Furthermore, it can also indicate here that the desired total quantity has now been removed from the powder container 80 and thus the removal operation shall end. Preferably, this is also acoustically indicated by the aforementioned loudspeaker of the electronic module 24.

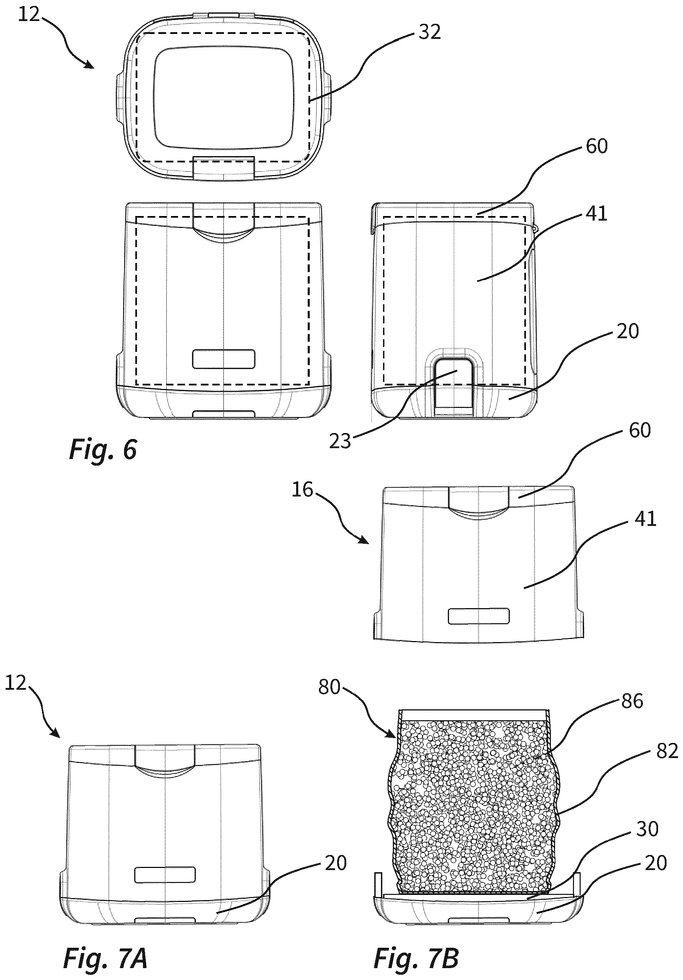

Figs. 6 and 7A and 7B show an alternative version of the main unit 12. One essential difference to the main unit 12 of the preceding figures is that the main unit 12 of Figs. 6 and 7A and 7B defines a cuboid-shaped receiving space 32. Another essential difference is that, for inserting a powder container 80, an upper part 16 of the main unit 12 can be removed, which comprises the entire surrounding receiving space wall 41 as well as the lid 60.

Once this upper part 16 has been lifted, the powder container 80 can be positioned on the weighing surface 30. In particular, it can be a powder container 80 with paper walls, which has an advantageous inherent stability due to its cuboid shape. After the powder container 80 is correctly arranged, the receiving space 32 is closed again by putting on the upper part 16.

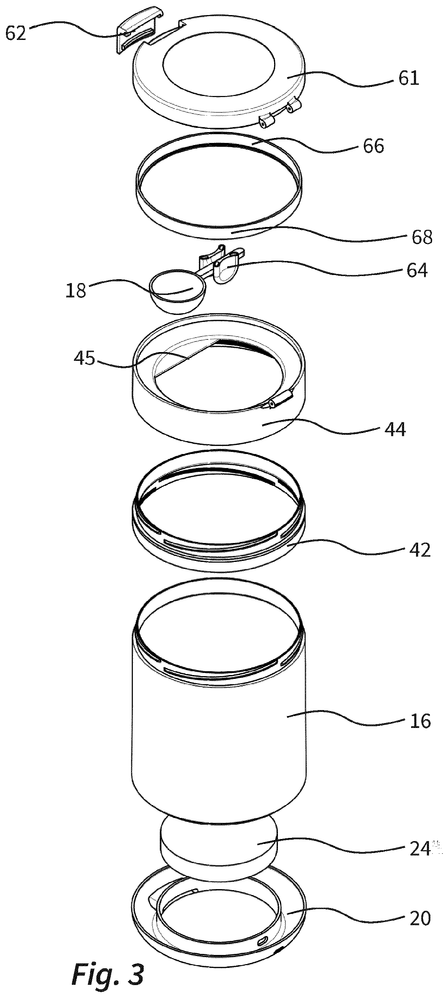

The upper part 16 is then fastened to the base housing 20 by means of snap locks 23. This results in a further difference to the design of Figs. 1 to 4. Unlike there, in the main unit 12 of Figs. 6 and 7A and 7B, the upper part 16 together with the lid 60 does not rest on the weighing sensor 58.

## Claims

1. Scale system (10) for measuring a powder quantity with the following features:
a. the scale system (10) comprises a base housing (20) for stationary placement, and
b. the scale system (10) comprises a weighing surface (30) movable relative to the base housing (20), and
c. the scale system (10) comprises a weighing sensor (58) that measures the mass of a powder container (80) on the weighing surface (30), and
d. the scale system (10) comprises an evaluation device (50), which is designed to evaluate sensor data from the weighing sensor (58) and to generate output data, and
e. the scale system comprises a display device (90) which is designed to output the output data,
**characterized by** the following further features:
f. the evaluation device (50) is configured to determine during a stepwise removal of a partial mass from the weighing surface (30) the partial mass already removed by comparing the mass currently measured by the weighing sensor (58) with a previously recorded reference mass (110) prior to the removal, and
g. the evaluation device (50) is configured to generate output data on basis of the partial mass already removed and to display said output data on the display device (90), said output data reflecting the partial mass removed since the recordation of the reference mass (110) and said output data comprising a growing output value (100, 102) representing the removed partial mass.

2. Scale system (10) according to claim 1 with the following further feature:
a. the output value (102) corresponds to a number of mass units, the value of said mass unit stored in the evaluation device (50) or calculable by the evaluation device (50), wherein the size of these mass units corresponds to a scoop filling quantity and preferably is between 2 grams and 8 grams.

3. Scale system (10) according to claim 1 or 2 having the following further feature:
a. the scale system (10) comprises a scoop (18),
preferably having at least one of the following additional features:
b. the scoop (18) has a scoop volume between 1 cm³ and 30 cm³, preferably between 4 cm³ and 9 cm³, and/or
c. the scale system (10) comprises a leveling rim (45) for wiping excess powder from the scoop (18), said leveling rim (45) preferably being provided on the base housing or stationery to the weighing surface (30).

4. Scale system (10) according to one of the preceding claims with the following further feature:
a. the scale system (10) comprises a scoop holder (64) for storing the scoop (18) when not in use, said scoop holder (64) being provided stationary to the weighing surface (30), preferably being provided on an inner side of a lid (60) of the scale system (10),
preferably having at least one of the following additional features:
b. wherein the scoop holder (64) is preferably a magnetic scoop holder or a clamping scoop holder, preferably made of an elastomeric material, and/or
c. the volume of the scoop (18) is stored in the evaluation device (50) for the purpose of determining the mass unit, and/or
d. the mass of the scoop (18) is stored in the evaluation device (50) for inclusion in a calculation regarding the already removed partial mass.

5. Scale system (10) according to one of the preceding claims with the following further feature:
a. the evaluation device (50) is configured
- to determine the partial mass of a single removal in the course of the stepwise increase of the removed partial mass, and
- to compare the partial mass of the single removal with an expected mass of a scoop filling quantity powder,
preferably having the following additional feature:
b. the evaluation device (50) is configured to determine the expected mass of a scoop filling quantity powder on basis of information about the powder density and a scoop volume.

6. Scale system (10) according to claim 5 with the following further feature:
a. the evaluation device (50) is configured to signal a deviation of the partial mass of the single removal from the expected mass of a scoop filling quantity powder, in particular by signaling via the display device (90), via a speaker or a haptic actuator, and/or LED.

7. Scale system (10) according to one of the preceding claims with the following further feature:
a. the evaluation device (50) is configured to determine and store the reference mass (110) before or at the start of usage of the scale system,
preferably with one of the following additional features:
b. the evaluation device (50) is configured to detect the start of usage of the scale system (10) by means of the weighing sensor (58), in particular by the beginning of the mass reduction in course of powder removal, by a movement of the base housing (20), by an opening movement of a lid (60) or by the detachment of a scoop (18), and/or
c. the evaluation device (50) is configured to detect the start of usage of the scale system (10) by an opening movement of a lid (60) using the weighing sensor or an additional sensor, in particular an accelerometer or a switch associated with the lid (60), and/or
d. the evaluation device (50) is configured to detect the start of usage of the scale system (10) by manual actuation of a hardware key or a software function.

8. Scale system (10) according to one of the preceding claims with the following further feature:
a. the evaluation device (50) is configured to store a history of removal events together with data regarding the removed mass in course of the removal,
preferably with the following additional feature:
b. the evaluation device (50) is configured to compile information about feeds, about missed feeds, about the total powder overweight or underweight removed over a defined time or over the time a current container has been in use.

9. Scale system (10) according to one of the preceding claims with the following further feature:
a. the scale system (10) comprises a receiving space (32) for receiving a powder container (80), the bottom surface of said receiving space (32) being formed by the weighing surface (30),
preferably with the following additional feature:
b. the receiving space is provided with a window, so that imprints on the powder container can be read when the powder container is arranged in the receiving space.

10. Scale system according to claim 9 with the following further features:
a. the receiving space (32) is circumferentially surrounded by a receiving space wall (40, 42, 44), and
b. on an upper side opposite the weighing surface (30) the receiving space (32) is provided with a removable or displaceable lid (60) which, in a closed state, closes off the receiving space at the top,
preferably with at least one of the following additional features:
c. the lid (60) is provided movably at an upper end face of the receiving space wall (44), in particular pivotably movably, wherein in particular preferably a snap-locking device (62) for fixing the lid (60) in the closed state is provided on the receiving space wall or on the lid (60), and/or
d. the lid (60) is provided with a lid window (68), through which it is possible to look into the powder container (80) from above, the lid window (68) preferably being formed by a tinted plastic element, and/or
e. the lid (60) or a contact edge of the receiving space wall is provided with a sealing component (66) sealingly isolating the receiving space (32) when the lid (60) is in its closed state, and/or
f. the receiving space (32) is of flexible size, wherein preferably the receiving space wall (40, 42, 44) has a modular design, so that the size of the receiving space can be adapted by using or not using at least one removable receiving space wall element (42), and/or
g. the receiving space wall is formed by at least two separable wall parts (40, 42, 44) which can be separated from each other for the purpose of opening the receiving space 32 in order to remove a powder container (80) and insert a powder container (80), wherein preferably the wall parts can be connected to one another by a threaded connection or by a snap connection, and/or

11. Scale system (10) according to any of claims 10 with the following further feature:
a. the receiving space wall (40, 42, 44) is connected to the weighing surface and forms a part of the weight sensed by the weighing sensor,
preferably with the following additional feature:
b. the receiving space wall (40) is at least partially formed integrally with the weighing surface (30) together forming a receptacle open at the upper end.

12. Scale system (10) according to one of the preceding claims with the following further feature:
a. on the weighing surface (30) or in the receiving space (32) of the scale system (10) a powder container (80) is arranged,
preferably with at least one of the following features:
b. the powder container (80) is at least partially made of metal and has, in particular a metal can as the container body (82), or
c. the powder container (80) is at least partially made of plastic, in particular with walls of a multilayered plastic material, or
d. the powder container (80) is formed at least predominantly and preferably completely from cardboard and/or multiple paper layers, and/or
e. the powder container (80) has flexible walls forming a powder bag, or
f. the powder container (80) has stiff walls forming a container of fixed dimensions, or
g. the powder container (80) has a cover element (84) which is not included in the receiving space (32) when the powder container (80) is inserted into the receiving space (32).

13. Scale system (10) according to one of the preceding claims with the following further feature:
a. the scale system (10) has two subunits (12, 14), namely a main unit (12), which comprises at least the base housing (20), the weighing surface (30) and the weighing sensor (58), and an additional unit, which comprises at least the display device (90),
preferably with at least one of the following additional features:
b. the subunits (12, 14) are connected via a wireless data network, and/or
c. the additional unit (14) is formed by a computer, a tablet computer, a smartphone, or a smartwatch, and/or
d. the additional unit (14) is connected to the Internet and is configured,
- to initiate order processes concerning new powder containers (80), and/or
- to load data on different types of powder containers (80) from the internet, and/or
- to check for an existing powder container (80), whether this container fulfills originality criteria, and/or
e. in addition to the display device (90) on the additional unit (14), an additional display device and/or at least one additional LED is provided on the main unit, and/or
f. the evaluation device (50) is provided as part of the main unit (12) or
g. the evaluation device (50) is split into evaluation subunits (50A,50B) being part of the main unit and the additional unit, said evaluation subunits:
- each having a processor and/or
- communicating over a wireless data network and/or
- cooperating such that the evaluation subunit (50A) of the main unit (12) processes the sensor data of the weighing sensor (58) and submits this data to the evaluation subunit (50B) of the additional unit (12) for further calculation of the output value (102), or
- cooperating such that the evaluation subunit (50A) of the main unit (12) processes the sensor data of the weighing sensor (58), calculates the output value (102) and submits the output value (102) to the evaluation subunit (50B) of the additional unit (12) for displaying it on the display device (90).

14. Scale system (10) according to one of the preceding claims with the following further feature:
a. the scale system (10) has at least one further sensor in addition to the weighing sensor, the at least one further sensor preferably fulfilling one of the following features:
- the at least one further sensor is a sensor for detecting a marking applied to the powder container, in particular an RFID reader for reading an RFID-Tag of the powder container or an optical sensor for reading a print on the powder container, and/or
- the at least one further sensor is a sensor for mechanically detecting the opening of the lid of the scale system, and/or
- the at least one further sensor is an accelerometer for detecting movement of the scale system, in particular of its base unit.

15. Scale system (10) according to one of the preceding claims with at least one of the following further features:
a. the scale system (10) has a signaling mechanism, which indicates by signalizing a pending removal of powder, in particular due to an upcoming feeding, and/or
b. the scale system (10) has a logging mechanism, which logs the removal of powder and/or an expected, but missing removal of powder, and/or
c. the scale system (10) can be disassembled without tools, whereby at least the base housing (20) and the weighing sensor (58) can be separated from each other without tools, and/or
d. the evaluation device (50) can be operated in a low-power mode in which at least the weighing sensor (58) is deactivated, or sensor data of the weighing sensor (58) is not evaluated, the evaluation device (50) preferably being configured to deactivate the low-power mode in response to the detection of a movement by a movement sensor, and/or
e. a power connection is provided on the base housing (20), preferably in the form of a USB power connection.

## Patentansprüche

1. Gewichtsmesssystem (10) zum Messen einer Pulvermenge mit folgenden Merkmalen:
a. das Gewichtsmesssystem (10) umfasst ein Grundgehäuse (20) zur stationären Aufstellung, und
b. das Gewichtsmesssystem (10) umfasst eine relativ zum Grundgehäuse (20) bewegliche Wägeoberfläche (30), und
c. das Gewichtsmesssystem (10) umfasst einen Wägesensor (58), der die Masse eines Pulverbehälters (80) auf der Wägeoberfläche (30) misst, und
d. das Gewichtsmesssystem (10) umfasst eine Auswertevorrichtung (50), die dazu ausgelegt ist, Sensordaten des Wägesensors (58) auszuwerten und Ausgabedaten zu erzeugen, und
e. das Gewichtsmesssystem umfasst eine Anzeigevorrichtung (90), die dazu ausgelegt ist, die Ausgabedaten auszugeben,
**gekennzeichnet durch** folgende weitere Merkmale:
f. die Auswertevorrichtung (50) ist dazu ausgelegt, während einer schrittweisen Entnahme einer Teilmasse von der Wägeoberfläche (30) die bereits entnommene Teilmasse zu bestimmen, indem die derzeit durch den Wägesensor (58) gemessene Masse mit einer vor der Entnahme erfassten Referenzmasse (110) verglichen wird, und
g. die Auswertevorrichtung (50) ist dazu ausgelegt, auf Grundlage der bereits entnommenen Teilmasse Ausgabedaten zu erzeugen und diese Ausgabedaten auf der Anzeigevorrichtung (90) anzuzeigen, wobei die Ausgabedaten die seit der Erfassung der Referenzmasse (110) entnommene Teilmasse widerspiegeln und die Ausgabedaten einen anwachsenden Ausgabewert (100, 102) umfassen, der die entnommene Teilmasse repräsentiert.

2. Gewichtsmesssystem (10) nach Anspruch 1 mit folgendem weiteren Merkmal:
a. der Ausgabewert (102) entspricht einer Anzahl von Masseneinheiten, deren Wert in der Auswertevorrichtung (50) gespeichert oder durch die Auswertevorrichtung (50) berechenbar ist, wobei die Größe dieser Masseneinheiten einer Löffelfüllmenge entspricht und vorzugsweise zwischen 2 Gramm und 8 Gramm liegt.

3. Gewichtsmesssystem (10) nach Anspruch 1 oder 2 mit folgendem weiteren Merkmal:
a. das Gewichtsmesssystem (10) umfasst einen Dosierlöffel (18),
vorzugsweise mit mindestens einem der folgenden zusätzlichen Merkmale:
b. der Dosierlöffel (18) weist ein Löffelvolumen zwischen 1 cm³ und 30 cm³, vorzugsweise zwischen 4 cm³ und 9 cm³ auf, und/oder
c. das Gewichtsmesssystem (10) umfasst einen Abstreifrand (45) zum Abstreifen überschüssigen Pulvers vom Dosierlöffel (18), wobei der Abstreifrand (45) vorzugsweise am Grundgehäuse oder ortsfest relativ zur Wägeoberfläche (30) vorgesehen ist.

4. Gewichtsmesssystem (10) nach einem der vorhergehenden Ansprüche mit folgendem weiteren Merkmal:
a. das Gewichtsmesssystem (10) umfasst einen Dosierlöffelhalter (64) zur Aufbewahrung des Dosierlöffels (18) bei Nichtgebrauch, wobei der Dosierlöffelhalter (64) ortsfest relativ zur Wägeoberfläche (30) vorgesehen ist, vorzugsweise an einer Innenseite eines Deckels (60) des Gewichtsmesssystems (10) vorgesehen ist,
vorzugsweise mit mindestens einem der folgenden zusätzlichen Merkmale:
b. wobei der Dosierlöffelhalter (64) vorzugsweise ein magnetischer Dosierlöffelhalter oder ein Klemm-Dosierlöffelhalter ist, vorzugsweise aus einem elastomeren Material hergestellt, und/oder
c. das Volumen des Dosierlöffels (18) in der Auswertevorrichtung (50) zum Zweck der Bestimmung der Masseneinheit gespeichert ist, und/oder
d. die Masse des Dosierlöffels (18) in der Auswertevorrichtung (50) zur Berücksichtigung in einer Berechnung hinsichtlich der bereits entnommenen Teilmasse gespeichert ist.

5. Gewichtsmesssystem (10) nach einem der vorhergehenden Ansprüche mit folgendem weiteren Merkmal:
a. die Auswertevorrichtung (50) ist dazu ausgelegt,
- im Verlauf der schrittweisen Zunahme der entnommenen Teilmasse die Teilmasse einer einzelnen Entnahme zu bestimmen, und
- die Teilmasse der einzelnen Entnahme mit einer erwarteten Masse einer Löffelfüllmenge Pulver zu vergleichen,
vorzugsweise mit folgendem zusätzlichen Merkmal:
b. die Auswertevorrichtung (50) ist dazu ausgelegt, die erwartete Masse einer Löffelfüllmenge Pulver basierend auf Informationen über die Pulverdichte und ein Löffelvolumen zu bestimmen.

6. Gewichtsmesssystem (10) nach Anspruch 5 mit folgendem weiteren Merkmal:
a. die Auswertevorrichtung (50) ist dazu ausgelegt, eine Abweichung der Teilmasse der einzelnen Entnahme von der erwarteten Masse einer Löffelfüllmenge Pulver zu signalisieren, insbesondere durch Signalisierung über die Anzeigevorrichtung (90), über einen Lautsprecher, einen haptischen Aktuator und/oder über eine LED.

7. Gewichtsmesssystem (10) nach einem der vorhergehenden Ansprüche mit folgendem weiteren Merkmal:
a. die Auswertevorrichtung (50) ist dazu ausgelegt, die Referenzmasse (110) vor oder zu Beginn der Nutzung des Gewichtsmesssystems zu bestimmen und zu speichern,
vorzugsweise mit einem der folgenden zusätzlichen Merkmale:
b. die Auswertevorrichtung (50) ist dazu ausgelegt, den Nutzungsbeginn des Gewichtsmesssystems (10) mittels des Wägesensors (58) zu erkennen, insbesondere durch die beginnende Massenabnahme im Verlauf der Pulverentnahme, durch eine Bewegung des Grundgehäuses (20), durch eine Öffnungsbewegung eines Deckels (60) oder durch die Abnahme eines Dosierlöffels (18), und/oder
c. die Auswertevorrichtung (50) ist dazu ausgelegt, den Nutzungsbeginn des Gewichtsmesssystems (10) durch eine Öffnungsbewegung eines Deckels (60) mittels des Wägesensors oder eines zusätzlichen Sensors, insbesondere eines Beschleunigungssensors oder eines dem Deckel (60) zugeordneten Schalters, zu erkennen, und/oder
d. die Auswertevorrichtung (50) ist dazu ausgelegt, den Nutzungsbeginn des Gewichtsmesssystems (10) durch manuelle Betätigung einer Hardwaretaste oder einer Softwarefunktion zu erkennen.

8. Gewichtsmesssystem (10) nach einem der vorhergehenden Ansprüche mit folgendem weiteren Merkmal:
a. die Auswertevorrichtung (50) ist dazu ausgelegt, eine Historie von Entnahmeereignissen zusammen mit Daten bezüglich der im Verlauf der Entnahme entnommenen Masse zu speichern,
vorzugsweise mit folgendem zusätzlichen Merkmal:
b. die Auswertevorrichtung (50) ist dazu ausgelegt, Informationen über Fütterungen, über ausgelassene Fütterungen sowie über das gesamte Pulver-über- oder -untergewicht, das innerhalb eines definierten Zeitraums oder während der Verwendungsdauer eines aktuellen Behälters entnommen wurde, zusammenzustellen.

9. Gewichtsmesssystem (10) nach einem der vorhergehenden Ansprüche mit folgendem weiteren Merkmal:
a. das Gewichtsmesssystem (10) umfasst einen Aufnahmeraum (32) zum Aufnehmen eines Pulverbehälters (80), wobei die Bodenfläche des Aufnahmeraums (32) durch die Wägeoberfläche (30) gebildet ist,
vorzugsweise mit folgendem zusätzlichen Merkmal:
b. der Aufnahmeraum ist mit einem Fenster versehen, sodass Aufdrucke auf dem Pulverbehälter ablesbar sind, wenn der Pulverbehälter im Aufnahmeraum angeordnet ist.

10. Gewichtsmesssystem nach Anspruch 9 mit folgenden weiteren Merkmalen:
a. der Aufnahmeraum (32) ist umlaufend von einer Aufnahmeraumwand (40, 42, 44) umgeben, und
b. an einer der Wägeoberfläche (30) gegenüberliegenden Oberseite ist der Aufnahmeraum (32) mit einem abnehmbaren oder verschiebbaren Deckel (60) versehen, der den Aufnahmeraum im Schließzustand nach oben hin abschließt,
vorzugsweise mit mindestens einem der folgenden zusätzlichen Merkmale:
c. der Deckel (60) ist an einer oberen Stirnseite der Aufnahmeraumwand (44) beweglich, insbesondere schwenkbar, gelagert, wobei insbesondere vorzugsweise eine Schnappverriegelungsvorrichtung (62) zum Fixieren des Deckels (60) im Schließzustand an der Aufnahmeraumwand oder am Deckel (60) vorgesehen ist, und/oder
d. der Deckel (60) ist mit einem Deckelfenster (68) versehen, durch das von oben in den Pulverbehälter (80) hineingesehen werden kann, wobei das Deckelfenster (68) vorzugsweise durch ein getöntes Kunststoffelement gebildet ist, und/oder
e. der Deckel (60) oder eine Kontaktkante der Aufnahmeraumwand ist mit einem Dichtungselement (66) versehen, das den Aufnahmeraum (32) bei geschlossenem Deckel (60) dichtend abgrenzt, und/oder
f. der Aufnahmeraum (32) ist flexibel groß ausgebildet, wobei vorzugsweise die Aufnahmeraumwand (40, 42, 44) modular ausgeführt ist, sodass die Größe des Aufnahmeraums durch Verwendung oder Nichtverwendung von mindestens einem abnehmbaren Aufnahmeraumwandelement (42) angepasst werden kann, und/oder
g. die Aufnahmeraumwand ist durch mindestens zwei voneinander trennbare Wandteile (40, 42, 44) gebildet, die zum Öffnen des Aufnahmeraums 32 voneinander getrennt werden können, um einen Pulverbehälter (80) zu entnehmen und einen Pulverbehälter (80) einzusetzen, wobei vorzugsweise die Wandteile mittels einer Schraubverbindung oder einer Schnappverbindung miteinander verbindbar sind, und/oder

11. Gewichtsmesssystem (10) nach einem der Ansprüche 10 mit folgendem weiteren Merkmal:
a. die Aufnahmeraumwand (40, 42, 44) ist mit der Wägeoberfläche verbunden und bildet einen Teil des durch den Wägesensor erfassten Gewichts,
vorzugsweise mit folgendem zusätzlichen Merkmal:
b. die Aufnahmeraumwand (40) ist zumindest teilweise einstückig mit der Wägeoberfläche (30) ausgebildet, wobei beide zusammen einen nach oben hin offenen Aufnahmeraum bilden.

12. Gewichtsmesssystem (10) nach einem der vorhergehenden Ansprüche mit folgendem weiteren Merkmal:
a. auf der Wägeoberfläche (30) oder im Aufnahmeraum (32) des Gewichtsmesssystems (10) ist ein Pulverbehälter (80) angeordnet,
vorzugsweise mit mindestens einem der folgenden Merkmale:
b. der Pulverbehälter (80) ist zumindest teilweise aus Metall hergestellt und weist insbesondere eine Metalldose als Behälterkörper (82) auf, und/oder
c. der Pulverbehälter (80) ist zumindest teilweise aus Kunststoff hergestellt, insbesondere mit Wänden aus einem mehrschichtigen Kunststoffmaterial, und/oder
d. der Pulverbehälter (80) ist zumindest überwiegend und vorzugsweise vollständig aus Karton und/oder mehreren Papierschichten gebildet, und/oder
e. der Pulverbehälter (80) weist flexible Wände auf, die einen Pulverbeutel bilden, oder
f. der Pulverbehälter (80) weist steife Wände auf, die einen Behälter mit festen Abmessungen bilden, oder
g. der Pulverbehälter (80) weist ein Abdeckelement (84) auf, das sich beim Einsetzen des Pulverbehälters (80) in den Aufnahmeraum (32) nicht innerhalb des Aufnahmeraums (32) befindet.

13. Gewichtsmesssystem (10) nach einem der vorhergehenden Ansprüche mit folgendem weiteren Merkmal:
a. das Gewichtsmesssystem (10) weist zwei Untereinheiten (12, 14) auf, nämlich eine Haupteinheit (12), die zumindest das Grundgehäuse (20), die Wägeoberfläche (30) und den Wägesensor (58) umfasst, und eine Zusatzeinheit, die zumindest die Anzeigevorrichtung (90) umfasst,
vorzugsweise mit mindestens einem der folgenden zusätzlichen Merkmale:
b. die Untereinheiten (12, 14) sind über ein drahtloses Datennetz verbunden, und/oder
c. die Zusatzeinheit (14) ist durch einen Computer, einen Tablet-Computer, ein Smartphone oder eine Smartwatch gebildet, und/oder
d. die Zusatzeinheit (14) ist mit dem Internet verbunden und dazu ausgelegt,
- Bestellvorgänge hinsichtlich neuer Pulverbehälter (80) einzuleiten, und/oder
- Daten zu unterschiedlichen Typen von Pulverbehältern (80) aus dem Internet zu laden, und/oder
- bei einem vorhandenen Pulverbehälter (80) zu prüfen, ob dieser Originalitätskriterien erfüllt, und/oder
e. zusätzlich zur Anzeigevorrichtung (90) an der Zusatzeinheit (14) ist an der Haupteinheit eine weitere Anzeigevorrichtung und/oder mindestens eine zusätzliche LED vorgesehen, und/oder
f. die Auswertevorrichtung (50) ist als Teil der Haupteinheit (12) vorgesehen, oder
g. die Auswertevorrichtung (50) ist in Auswerteuntereinheiten (50A, 50B) aufgeteilt, die Teil der Haupteinheit und der Zusatzeinheit sind, wobei diese Auswerteuntereinheiten
- jeweils einen Prozessor aufweisen und/oder
- über ein drahtloses Datennetz kommunizieren und/oder
- derart zusammenwirken, dass die Auswerteuntereinheit (50A) der Haupteinheit (12) die Sensordaten des Wägesensors (58) verarbeitet und diese Daten zur weiteren Berechnung des Ausgabewerts (102) an die Auswerteuntereinheit (50B) der Zusatzeinheit (12) übermittelt, oder
- derart zusammenwirken, dass die Auswerteuntereinheit (50A) der Haupteinheit (12) die Sensordaten des Wägesensors (58) verarbeitet, den Ausgabewert (102) berechnet und den Ausgabewert (102) zur Anzeige auf der Anzeigevorrichtung (90) an die Auswerteuntereinheit (50B) der Zusatzeinheit (12) übermittelt.

14. Gewichtsmesssystem (10) nach einem der vorhergehenden Ansprüche mit folgendem weiteren Merkmal:
a. das Gewichtsmesssystem (10) weist zusätzlich zum Wägesensor mindestens einen weiteren Sensor auf, wobei der mindestens eine weitere Sensor vorzugsweise eines der folgenden Merkmale erfüllt:
- der mindestens eine weitere Sensor ist ein Sensor zum Erkennen einer an dem Pulverbehälter angebrachten Markierung, insbesondere ein RFID-Leser zum Auslesen eines RFID-Tags des Pulverbehälters oder ein optischer Sensor zum Lesen eines Aufdrucks auf dem Pulverbehälter, und/oder
- der mindestens eine weitere Sensor ist ein Sensor zum mechanischen Erfassen des Öffnens des Deckels des Gewichtsmesssystems, und/oder
- der mindestens eine weitere Sensor ist ein Beschleunigungssensor zum Erfassen einer Bewegung des Gewichtsmesssystems, insbesondere seiner Basiseinheit.

15. Gewichtsmesssystem (10) nach einem der vorhergehenden Ansprüche mit mindestens einem der folgenden weiteren Merkmale:
a. das Gewichtsmesssystem (10) weist eine Signalisierungsvorrichtung auf, die durch Signalisieren eine anstehende Pulverentnahme anzeigt, insbesondere aufgrund einer bevorstehenden Fütterung, und/oder
b. das Gewichtsmesssystem (10) weist eine Protokollierungsvorrichtung auf, die die Pulverentnahme und/oder eine erwartete, aber ausbleibende Pulverentnahme protokolliert, und/oder
c. das Gewichtsmesssystem (10) ist werkzeuglos zerlegbar, wobei zumindest das Grundgehäuse (20) und der Wägesensor (58) werkzeuglos voneinander trennbar sind, und/oder
d. die Auswertevorrichtung (50) ist in einem Energiesparmodus betreibbar, in dem zumindest der Wägesensor (58) deaktiviert ist oder Sensordaten des Wägesensors (58) nicht ausgewertet werden, wobei die Auswertevorrichtung (50) vorzugsweise dazu ausgelegt ist, den Energiesparmodus in Reaktion auf die Erfassung einer Bewegung durch einen Bewegungssensor zu deaktivieren, und/oder
e. am Grundgehäuse (20) ist ein Stromanschluss vorgesehen, vorzugsweise in Form eines USB-Stromanschlusses.

## Revendications

1. Système de mesure de poids (10) pour mesurer une quantité de poudre avec les caractéristiques suivantes :
a. le système de mesure de poids (10) comprend un logement de base (20) pour un placement stationnaire, et
b. le système de mesure de poids (10) comprend une surface de pesée (30) mobile relativement au logement de base (20), et
c. le système de mesure de poids (10) comprend un capteur de pesée (58) qui mesure la masse d'un récipient de poudre (80) sur la surface de pesée (30), et
d. le système de mesure de poids (10) comprend un dispositif d'évaluation (50), qui est conçu pour évaluer des données de capteur provenant du capteur de pesée (58) et pour générer des données de sortie, et
e. le système de mesure de poids comprend un dispositif d'affichage (90) qui est conçu pour fournir en sortie les données de sortie,
**caractérisé par** les caractéristiques supplémentaires suivantes :
f. le dispositif d'évaluation (50) est configuré pour déterminer lors d'un retrait progressif d'une masse partielle de la surface de pesée (30) la masse partielle déjà retirée en comparant la masse actuellement mesurée par le capteur de pesée (58) avec une masse de référence (110) préalablement enregistrée avant le retrait, et
g. le dispositif d'évaluation (50) est configuré pour générer des données de sortie sur la base de la masse partielle déjà retirée et pour afficher lesdites données de sortie sur le dispositif d'affichage (90), lesdites données de sortie reflétant la masse partielle retirée depuis l'enregistrement de la masse de référence (110) et lesdites données de sortie comprenant une valeur de sortie (100, 102) croissante représentant la masse partielle retirée.

2. Système de mesure de poids (10) selon la revendication 1 avec la caractéristique supplémentaire suivante :
a. la valeur de sortie (102) correspond à un nombre d'unités de masse, la valeur de ladite unité de masse étant stockée dans le dispositif d'évaluation (50) ou calculable par le dispositif d'évaluation (50), dans lequel la taille de ces unités de masse correspond à une quantité de remplissage de pelle et sont préférablement comprise entre 2 grammes et 8 grammes.

3. Système de mesure de poids (10) selon la revendication 1 ou la revendication 2 ayant la caractéristique supplémentaire suivante :
a. le système de mesure de poids (10) comprend une pelle (18),
préférablement ayant au moins l'une des caractéristiques additionnelles suivantes :
b. la pelle (18) a un volume de pelle compris entre 1 cm³ et 30 cm³, préférablement entre 4 cm³ et 9 cm³, et/ou
c. le système de mesure de poids (10) comprend un rebord de nivellement (45) pour enlever l'excès de poudre de la pelle (18), ledit rebord de nivellement (45) étant préférablement prévu sur le logement de base ou stationnaire sur la surface de pesée (30).

4. Système de mesure de poids (10) selon l'une des revendications précédentes avec la caractéristique supplémentaire suivante :
a. le système de mesure de poids (10) comprend un support de pelle (64) pour stocker la pelle (18) lorsqu'elle n'est pas utilisée, ledit support de pelle (64) étant prévu de manière stationnaire sur la surface de pesée (30), étant préférablement prévu sur un côté interne d'un couvercle (60) du système de mesure de poids (10),
préférablement ayant au moins l'une des caractéristiques additionnelles suivantes :
b. dans lequel le support de pelle (64) est préférablement un support de pelle magnétique ou un support de pelle à pince, préférablement constitué d'un matériau élastomère, et/ou
c. le volume de la pelle (18) est stocké dans le dispositif d'évaluation (50) dans le but de déterminer l'unité de masse, et/ou
d. la masse de la pelle (18) est stockée dans le dispositif d'évaluation (50) en vue d'une inclusion dans un calcul portant sur la masse partielle déjà retirée.

5. Système de mesure de poids (10) selon l'une des revendications précédentes avec la caractéristique supplémentaire suivante :
a. le dispositif d'évaluation (50) est configuré
- pour déterminer la masse partielle d'un retrait unique au cours de l'augmentation progressive de la masse partielle retirée, et
- pour comparer la masse partielle du retrait unique avec une masse attendue d'une poudre de quantité de remplissage de pelle,
préférablement ayant la caractéristique additionnelle suivante :
b. le dispositif d'évaluation (50) est configuré pour déterminer la masse attendue d'une poudre de quantité de remplissage de pelle sur la base d'informations sur la densité de poudre et un volume de pelle.

6. Système de mesure de poids (10) selon la revendication 5 avec la caractéristique supplémentaire suivante :
a. le dispositif d'évaluation (50) est configuré pour signaler un écart entre la masse partielle du retrait unique et la masse attendue d'une poudre de quantité de remplissage de pelle, en particulier en signalant par l'intermédiaire du dispositif d'affichage (90), par l'intermédiaire d'un haut-parleur ou d'un actionneur haptique, et/ou d'une DEL.

7. Système de mesure de poids (10) selon l'une des revendications précédentes avec la caractéristique supplémentaire suivante :
a. le dispositif d'évaluation (50) est configuré pour déterminer et stocker la masse de référence (110) avant ou au début de l'utilisation du système de mesure de poids,
préférablement avec l'une des caractéristiques additionnelles suivantes :
b. le dispositif d'évaluation (50) est configuré pour détecter le début d'utilisation du système de mesure de poids (10) au moyen du capteur de pesée (58), en particulier par le commencement de la réduction de masse en cours de retrait de poudre, par un déplacement du logement de base (20), par un déplacement d'ouverture d'un couvercle (60) ou par le détachement d'une pelle (18), et/ou
c. le dispositif d'évaluation (50) est configuré pour détecter le début de l'utilisation du système de mesure de poids (10) par un déplacement d'ouverture d'un couvercle (60) à l'aide du capteur de pesée ou d'un capteur additionnel, en particulier d'un accéléromètre ou d'un commutateur associé au couvercle (60), et/ou
d. le dispositif d'évaluation (50) est configuré pour détecter le début d'utilisation du système de mesure de poids (10) par actionnement manuel d'une clé matérielle ou d'une fonction logicielle.

8. Système de mesure de poids (10) selon l'une des revendications précédentes avec la caractéristique supplémentaire suivante :
a. le dispositif d'évaluation (50) est configuré pour stocker un historique d'événements de retrait conjointement avec des données portant sur la masse retirée au cours du retrait,
préférablement avec la caractéristique additionnelle suivante :
b. le dispositif d'évaluation (50) est configuré pour compiler des informations sur des alimentations, sur des alimentations manquées, sur le surpoids ou le sous-poids de poudre total retiré sur un temps défini ou sur le temps pendant lequel un récipient actuel a été utilisé.

9. Système de mesure de poids (10) selon l'une des revendications précédentes avec la caractéristique supplémentaire suivante :
a. le système de mesure de poids (10) comprend un espace de réception (32) pour recevoir un récipient de poudre (80), la surface de dessous dudit espace de réception (32) étant formée par la surface de pesée (30),
préférablement avec la caractéristique additionnelle suivante :
b. l'espace de réception est pourvu d'une fenêtre, de sorte que des impressions sur le récipient de poudre puissent être lues lorsque le récipient de poudre est agencé dans l'espace de réception.

10. Système de mesure de poids selon la revendication 9 avec les caractéristiques supplémentaires suivantes :
a. l'espace de réception (32) est entouré de manière circonférentielle par une paroi d'espace de réception (40, 42, 44), et
b. sur un côté supérieur opposé à la surface de pesée (30), l'espace de réception (32) est pourvu d'un couvercle amovible ou pouvant être déplacé (60) qui, dans un état fermé, ferme l'espace de réception au niveau du sommet,
préférablement avec au moins l'une des caractéristiques additionnelles suivantes :
c. le couvercle (60) est prévu de façon mobile au niveau d'une face d'extrémité supérieure de la paroi d'espace de réception (44), dans lequel en particulier mobile de manière pivotante, en particulier préférablement un dispositif de verrouillage par encliquetage (62) pour fixer le couvercle (60) dans l'état fermé est prévu sur la paroi d'espace de réception ou sur le couvercle (60), et/ou
d. le couvercle (60) est pourvu d'une fenêtre de couvercle (68), à travers laquelle il est possible de regarder dans le récipient de poudre (80) depuis le dessus, la fenêtre de couvercle (68) étant préférablement formée par un élément en plastique teinté, et/ou
e. le couvercle (60) ou un bord de contact de la paroi d'espace de réception est pourvu d'un composant d'étanchéité (66) isolant de manière étanche l'espace de réception (32) lorsque le couvercle (60) est dans son état fermé, et/ou
f. l'espace de réception (32) est de taille flexible, dans lequel la paroi d'espace de réception (40, 42, 44) a préférablement une conception modulaire, de sorte que la taille de l'espace de réception puisse être adaptée en utilisant ou n'utilisant pas au moins un élément de paroi d'espace de réception amovible (42), et/ou
g. la paroi d'espace de réception est formée d'au moins deux parties de paroi séparables (40, 42, 44) qui peuvent être séparées l'une de l'autre dans le but d'ouvrir l'espace de réception 32 afin de retirer un récipient de poudre (80) et d'insérer un récipient de poudre (80), dans lequel les parties de paroi peuvent préférablement être connectées l'une à l'autre par une connexion filetée ou par une connexion par cliquet, et/ou

11. Système de mesure de poids (10) selon l'une quelconque des revendications 10 avec la caractéristique supplémentaire suivante :
a. la paroi d'espace de réception (40, 42, 44) est connectée à la surface de pesée et forme une partie du poids détecté par le capteur de pesée,
préférablement avec la caractéristique additionnelle suivante :
b. la paroi d'espace de réception (40) est au moins partiellement formée d'un seul tenant avec la surface de pesée (30) formant ensemble un réceptacle ouvert au niveau de l'extrémité supérieure.

12. Système de mesure de poids (10) selon l'une des revendications précédentes avec la caractéristique supplémentaire suivante :
a. sur la surface de pesée (30) ou dans l'espace de réception (32) du système de mesure de poids (10), un récipient de poudre (80) est agencé,
préférablement avec au moins l'une des caractéristiques suivantes :
b. le récipient de poudre (80) est au moins partiellement constitué de métal et a, en particulier, une boîte métallique en tant que corps de récipient (82), ou
c. le récipient de poudre (80) est au moins partiellement constitué de matière plastique, en particulier avec des parois d'un matériau plastique multicouche, ou
d. le récipient de poudre (80) est formé au moins de manière prédominante et préférablement de manière complète à partir de carton et/ou de multiples couches de papier, et/ou
e. le récipient de poudre (80) a des parois flexibles formant un sac de poudre, ou
f. le récipient de poudre (80) a des parois rigides formant un récipient de dimensions fixes, ou
g. le récipient de poudre (80) a un élément de couverture (84) qui n'est pas inclus dans l'espace de réception (32) lorsque le récipient de poudre (80) est inséré dans l'espace de réception (32).

13. Système de mesure de poids (10) selon l'une des revendications précédentes avec la caractéristique supplémentaire suivante :
a. le système de mesure de poids (10) a deux sous-unités (12, 14), à savoir une unité principale (12), qui comprend au moins le logement de base (20), la surface de pesée (30) et le capteur de pesée (58), et une unité additionnelle, qui comprend au moins le dispositif d'affichage (90),
préférablement avec au moins l'une des caractéristiques additionnelles suivantes :
b. les sous-unités (12, 14) sont connectées par l'intermédiaire d'un réseau de données sans fil, et/ou
c. l'unité additionnelle (14) est formée d'un ordinateur, d'une tablette électronique, d'un téléphone intelligent, ou d'une montre intelligente, et/ou
d. l'unité additionnelle (14) est connectée à Internet et est configurée,
- pour déclencher des processus de commande concernant de nouveaux récipients de poudre (80), et/ou
- pour charger des données sur différents types de récipients de poudre (80) à partir d'Internet, et/ou
- pour vérifier pour un récipient de poudre (80) existant, si ce récipient remplit des critères d'originalité, et/ou
e. en plus du dispositif d'affichage (90) sur l'unité additionnelle (14), un dispositif d'affichage additionnel et/ou au moins une DEL additionnelle sont prévus sur l'unité principale, et/ou
f. le dispositif d'évaluation (50) est prévu comme partie de l'unité principale (12) ou
g. le dispositif d'évaluation (50) est divisé en sous-unités d'évaluation (50A, 50B) faisant partie de l'unité principale et de l'unité additionnelle, lesdites sous-unités d'évaluation :
- ayant chacune un processeur et/ou
- communiquant sur un réseau de données sans fil et/ou
- coopérant de telle sorte que la sous-unité d'évaluation (50A) de l'unité principale (12) traite les données de capteur du capteur de pesée (58) et soumette ces données à la sous-unité d'évaluation (50B) de l'unité additionnelle (12) pour un calcul supplémentaire de la valeur de sortie (102), ou
- coopérant de telle sorte que la sous-unité d'évaluation (50A) de l'unité principale (12) traite les données de capteur du capteur de pesée (58), calcule la valeur de sortie (102) et soumette la valeur de sortie (102) à la sous-unité d'évaluation (50B) de l'unité additionnelle (12) pour l'afficher sur le dispositif d'affichage (90).

14. Système de mesure de poids (10) selon l'une des revendications précédentes avec la caractéristique supplémentaire suivante :
a. le système de mesure de poids (10) a au moins un capteur supplémentaire en plus du capteur de pesée, l'au moins un capteur supplémentaire remplissant préférablement l'une des caractéristiques suivantes :
- l'au moins un capteur supplémentaire est un capteur pour détecter un marquage appliqué au récipient de poudre, en particulier un lecteur RFID pour lire une étiquette RFID du récipient de poudre ou un capteur optique pour lire une impression sur le récipient de poudre, et/ou
- l'au moins un capteur supplémentaire est un capteur de détection mécanique de l'ouverture du couvercle du système de mesure de poids, et/ou
- l'au moins un capteur supplémentaire est un accéléromètre pour détecter un déplacement du système de mesure de poids, en particulier de son unité de base.

15. Système de mesure de poids (10) selon l'une des revendications précédentes avec au moins l'une des caractéristiques supplémentaires suivantes :
a. le système de mesure de poids (10) a un mécanisme de signalisation, qui indique en signalant un retrait de poudre en attente, en particulier en raison d'une alimentation à venir, et/ou
b. le système de mesure de poids (10) a un mécanisme de journalisation, qui journalise le retrait de poudre et/ou un retrait de poudre attendu, mais manquant, et/ou
c. le système de mesure de poids (10) peut être désassemblé sans outils, grâce à quoi au moins le logement de base (20) et le capteur de pesée (58) peuvent être séparés l'un de l'autre sans outils, et/ou
d. le dispositif d'évaluation (50) peut être exploité dans un mode de faible puissance dans lequel au moins le capteur de pesée (58) est désactivé, ou des données de capteur du capteur de pesée (58) ne sont pas évaluées, le dispositif d'évaluation (50) étant préférablement configuré pour désactiver le mode de faible puissance en réponse à la détection d'un déplacement par un capteur de déplacement, et/ou
e. une connexion de puissance est prévue sur le logement de base (20), préférablement sous la forme d'une connexion de puissance USB.
